Europäisches Patentamt

European Patent Office

Office européen des brevets

(19)

(11) **EP 1 475 248 B1**

## (12) EUROPÄISCHE PATENTSCHRIFT

(45) Veröffentlichungstag und Bekanntmachung des Hinweises auf die Patenterteilung:
**22.03.2006 Patentblatt 2006/12**

(51) Int Cl.:
***B60C 9/22*** *(2006.01)*      ***B60C 9/00*** *(2006.01)*

(21) Anmeldenummer: **03010462.4**

(22) Anmeldetag: **09.05.2003**

(54) **Gürtelbandage mit Hybridkord und Reifen damit**

Tire overlay with hybridcord and tire therewith

Couche de recouvrement avec cable hybride et pneu comprennant une tel couche

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**10.11.2004 Patentblatt 2004/46**

(73) Patentinhaber: **Continental Aktiengesellschaft**
**30165 Hannover (DE)**

(72) Erfinder:
• **Dehnert, Jörg**
**31535 Neustadt/Rbge (DE)**
• **Wahl, Günter, Dr.**
**31249 Hohenhameln/Clauen (DE)**

(56) Entgegenhaltungen:
**EP-A- 0 467 585**      **EP-A- 0 661 179**
**EP-A- 1 207 055**

• **PATENT ABSTRACTS OF JAPAN vol. 017, no. 222 (M-1404), 7. Mai 1993 (1993-05-07) & JP 04 356205 A (SUMITOMO RUBBER IND LTD), 9. Dezember 1992 (1992-12-09)**

**Beschreibung**

Die Erfindung betrifft eine Lage mit in eine unvulkanisierte Kautschukmischung eingebetteten Festigkeitsträgern für die Gürtelbandage von Fahrzeugluftreifen, wobei die Festigkeitsträger innerhalb der Lage im Wesentlichen parallel zueinander verlaufen und Hybridcorde sind, die aus einem ersten verdrehten Garn mit einem hohen Elastizitätsmodul und einem zweiten verdrehten Garn mit einem niedrigen Elastizitätsmodul, die miteinander endverdreht sind, aufgebaut sind. Ferner betrifft die Erfindung einen Fahrzeugluftreifen, enthaltend eine Gürtelbandage aus einer solchen Lage.

Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummiaufstreifen und einen Gürtel zwischen dem Gummiaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Bei der Bombage und Vulkanisation des Reifens erhebt/dehnt sich der Reifen in der Regel im Schulterbereich um ca. 1 bis 2 % und im Mittenbereich um ca. 3 bis 4 % im Vergleich zum unvulkanisierten Rohling, wenn der Rohling auf einer flachen Trommel gewickelt wird.

In der EP-B 0 335 588 und in der gattungsgemäßen EP-B 0 661 179 werden für die Festigkeitsträgercorde in der Gürtelbandage Hybridcorde vorgeschlagen, die aus Garnen mit hohem und mit niedrigerem Elastizitätsmodul zusammengedreht sind. Die Corde weisen in einem Zugkraft-Dehnungs-Diagramm bei geringer Dehnung zunächst eine geringe Steigung der Kurve auf; bei höherer Dehnung steigt dann die Kurve stark an. In diesem letzten Bereich ist eine geringe weitere Dehnung z. B. von 6 auf 7 % mit hohem Kraftaufwand verbunden. Die Corde sollen bei der Reifenherstellung eine ausreichende Erhebung bei der Bombage und in der Vulkanisationsform zulassen, damit der Reifen präzise ausgeformt werden kann, und sie gewährleisten nach der Fertigstellung des Reifens im Fahrbetrieb gute Hochgeschwindigkeitstauglichkeit.

Lagen mit in eine unvulkanisierte Kautschukmischung eingebetteten Festigkeitsträgern für die Gürtelbandage von Fahrzeugluftreifen, deren Festigkeitsträger innerhalb der Lage im Wesentlichen parallel zueinander verlaufen und Hybridcorde sind, die aus einem ersten verdrehten Garn mit einem hohen Elastizitätsmodul von zumindest 30000 N/mm$^2$ und einem zweiten verdrehten Garn mit einem niedrigen Elastizitätsmodul von nicht mehr als 20000 N/mm$^2$, die miteinander endverdreht sind, aufgebaut sind, sind aus der EP-B 0 661 179 bekannt, wobei bei der Lage für die Gürtelbandage die Cordzahl E in Corden pro 5 cm Lagenbreite, die Kraft $F_1$ bei 2 % Dehnung des Hybridcordes (Dehnungsbereich, der für die Erhebung bei der Herstellung des Reifens relevant ist) und die Kraft $F_2$ bei 6 % Dehnung des Hybridcordes (Dehnungsbereich, der für das Hochgeschwindigkeitsfahren relevant ist) die folgenden Beziehungen erfüllen: $F_1$ x E < 60 kgf (= 588,4 N), $F_2$ x E > 150 kgf ($\approx$ 1471 N). Die Reifen mit einer solchen Lage als Bandage weisen neben guter Herstellbarkeit und Haltbarkeit ein verringertes Gewicht auf. Es hat sich aber herausgestellt, dass Reifen mit derartigen Gürtelbandage noch Nachteile im Abriebverhalten aufweisen.

Der vorliegenden Erfindung liegt die Aufgabe zu Grunde, Lagen aus in Kautschuk eingebetteten Festigkeitsträgern für die Gürtelbandage von Reifen bereitzustellen, die eine sehr gute Hochgeschwindigkeitshaltbarkeit beim Reifen gewährleisten und zusätzlich beim Reifen ein verbessertes Abriebverhalten, d. h. einen verringerten Abrieb insbesondere im Geschwindigkeitsbereich bis ca. 200 km/h, und eine erhöhte Langzeithaltbarkeit bewirken. Die Laufleistung eines Reifens mit einer Gürtelbandage auf einer solchen Lage wird dadurch verlängert.

Gelöst wird diese Aufgabe erfindungsgemäß dadurch, dass die Hybridcorde aus einem ersten verdrehten Garn mit einem hohen Elastizitätsmodul von zumindest 25000 N/mm$^2$ und einem zweiten verdrehten Garn mit einem niedrigen Elastizitätsmodul von nicht mehr als 15000 N/mm$^2$, die miteinander endverdreht sind, aufgebaut sind, dass die Hybridcorde symmetrisch aufgebaut sind, d. h. die Erstverdrehungzahlen des ersten und des zweiten Garnes sind im Wesentlichen gleich mit einer maximalen Abweichung von 7 %, ein Garn ist in Z- und das andere in S-Richtung gedreht und der Cord ist mit einer den Erstverdrehungszahlen im Wesentlichen gleichen Endverdrehungszahl zusammengedreht, und dass die Cordzahl E in Corden pro 5 cm Lagenbreiten (Cordfadendichte), die Kraft $F_1$ bei 2 % Dehnung des Hybridcordes und die Kraft $F_2$ bei 6 % Dehnung des Hybridcordes die folgenden Beziehungen erfüllen:

$$F_1 \text{ x } E \geq 600 \text{ N}$$

$$F_2 \text{ x } E > 1500 \text{ N}.$$

Der Grundgedanke der Erfindung ist darin zu sehen, dass eine erfindungsgemäße Lage bei der Herstellung eines Fahrzeugluftreifens zwar durch die symmetrischen Corden aus hoch- und niedrigmoduligem Garn und das Dehnverhalten noch eine ausreichende Erhebung bei der Bombage und der Vulkanisation ermöglicht, aber durch die hohen Kräfte, die schon bei geringer Dehnung von 2 % auftreten ($F_1$ x E ≥ 600 N) dem Reifen eine erhöhte Umfangssteifigkeit und eine flachere Reifenkontur verleiht, die dann ein besonders gutes Abriebverhalten bewirken. Es werden überraschenderweise sowohl Verbesserungen (d. h. Verringerung der Abriebs) im ungleichmäßigen und lokalen Abrieb (z. B. Klotzausbrüche oder Sägezahnprofil) als auch im über die Umfangsrichtung gleichförmigen Abrieb (z. B. Rippenabsenkungen) erzielt. Gleichzeitig bewirkt die erhöhte Umfangssteifigkeit eine verbesserte Hochgeschwindigkeitshaltbarkeit. Der Aufbau der Hybridcorde in symmetrischer Weise führt zugleich zu einer verbesserten Langzeithaltbarkeit des Reifens, da die symmetrischen Corde eine deutlich verbesserte Ermüdungsbeständigkeit aufweisen.

Außerdem bieten Reifen mit den erfindungsgemäßen Lagen als Gürtelbandage den Vorteil eines deutlich verringerten Abplattens bei Last (Flatspotting) und das Reifengewicht kann im Vergleich zu Reifen mit herkömmlichen Nylonbandagen stark reduziert werden, ohne dass Einbußen in anderen Reifeneigenschaften hingenommen werden müssen, da weniger oder dünnere Festigkeitsträgercorde benötigt werden. Der Hybridcord vereinigt die Vorteile eines Garnes mit hohem Modul und eines Garnes mit niedrigem Modul.

Für ein besonders gutes Abriebverhalten von Reifen und eine gute Herstellbarkeit hat es sich als vorteilhaft erwiesen, wenn die Cordzahl E in Corden pro 5 cm Lagenbreite und die Kraft $F_1$ bei 2 % Dehnung des Hybridcordes die folgende Beziehung erfüllen:

$$1000 \text{ N} < F_1 \text{ x } E < 2000 \text{ N}.$$

Gemäß einer vorteilhaften Weiterbildung der Erfindung erfüllen die Cordzahl E in Corden pro 5 cm Lagenbreite und die Kraft $F_2$ bei 6 % Dehnung des Hybridcordes die folgende Beziehung: 5500 N < $F_2$ x E < 11000 N. Bei Verwendung einer solche Lage für die Gürtelbandage eines Reifens erhält man eine besonders gute Haltbarkeit bei Hochgeschwindigkeitsreifen, ohne Einbußen beispielsweise im Komfort hinnehmen zu müssen.

Um das Abriebverhalten von Reifen weiter zu verbessern, hat es sich als positiv erwiesen, dass die Cordzahl E in Corden pro 5 cm Lagenbreite und die Kraft $F_3$ bei 1 % Dehnung des Hybridcordes die folgende Beziehung erfüllen:

$$F_3 \text{ x } E > 250 \text{ N}.$$

Für eine weiter verbesserte Hochgeschwindigkeitshaltbarkeit erfüllen die Cordzahl E in Corden pro 5 cm Lagenbreite und die Kraft $F_4$ bei 4 % Dehnung des Hybridcordes die folgende Beziehung:

$$F_4 \text{ x } E > 3000 \text{ N}.$$

Gemäß einer vorteilhaften Weiterbildung der Erfindung handelt es sich bei dem Garn mit hohem Elastizitätsmodul um ein Aramidgarn mit einer Feinheit ≥ 1100 dtex, vorzugsweise 1670 dtex. Beim Aramidgarn handelt es sich um ein Garn mit besonders hohem Elastizitätsmodul, welches durch Verdrehen von Einzelfäden mit einem jeweiligen Elastizitätsmodul von 70000 bis 120000 N/mm$^2$ durch geeignete Verdrehungszahl erzeugt wird. Aramidgarne weisen eine besonders hohe Zugfestigkeit und Reißfestigkeit auf, sind thermisch besonders stabil und haben ein geringes Gewicht. Aramidgarne mit einer höheren Feinheit sind in der Regel pro kg Aramid preiswerter als Garne mit einer geringeren Feinheit.

Bevorzugt wird als Aramidgarn ein Garn verwendet, welches auf Co-Poly-para-phenylen-3,4'-oxydiphenylen-terephthalamid basiert. Derartige Garne sind z. B. unter der Marke Technora® im Handel erhältlich. Bei Co-Poly-para-phenylen-3,4'-oxydiphenylen-terephthalamid handelt es sich um einen Aramidtyp, dessen Einzelfäden vor der Verdrehung zum Garn einen Elastizitätsmodul von nur 74000 N/mm$^2$ aufweisen. Einzelfäden anderer Aramidtypen wie Kevlar® oder Twaron® weisen einen Elastizitätsmodul von 120000 N/mm$^2$ auf. Co-Poly-para-phenylen-3,4'-oxydiphenylen-terephthalamid ermöglicht daher die Verwendung von Aramidgarn mit hoher Feinheit für den Hybridcord, ohne dass der Elastizitätsmodul des gesamten Hybridcordes einen zu hohen Wert annimmt. Zu hohe Werte im Elastizitätsmodul des Hybridcordes wirken sich nachteilig bei Reifenbauverfahren aus, die mit einer Erhebung bei der Bombage und Vulkanisation arbeiten.

Als Garn mit dem niedrigen Elastizitätsmodul wird bevorzugt ein Nylongarn, z. B. Nylon 6 oder Nylon 6.6) mit einer Feinheit ≥ 940 dtex, vorzugsweise 1400 dtex, eingesetzt. Nylongarn zeichnet sich durch eine vorteilhafte Wärmeschrumpfkraft aus. Je höher die Feinheit des Nylongarns im Hybridcord, desto höher ist auch der Nylonanteil im Hybridcord und desto besser können die Wärmeschrumpfkräfte des Cordes für eine erhöhte Umfangssteifigkeit und für ein verbessertes Hochgeschwindigkeitsverhalten genutzt werden.

Der Unterschied in den Feinheiten zwischen dem Garn mit dem niedrigen Modul und dem Garn mit dem hohen Modul sollte möglichst gering gewählt werden, um einen möglichst gleichmäßigen Cord zu erhalten, der sich gut verarbeiten lässt und der eine gute Restfestigkeit nach Ermüdung aufweist. Als besonders vorteilhaft in dieser Hinsicht hat sich ein Hybridcord aus Aramidgarn mit 1670 dtex und einem Nylongarn mit 1400 dtex erwiesen, der eine hervorragende Wärmeschrumpfkraft und Restfestigkeit bei Ermüdung aufweist und der gleichzeitig kostengünstig ist.

Gemäß einer vorteilhaften Weiterbildung der Erfindung betragen die Erst- und Endverdrehungszahlen 320 bis 400 T/m (Drehungen pro Meter). Auf diese Weise erhält man einen besonders gut verarbeitbaren Cord, der eine gute Flexibilität und Ermüdungsbeständigkeit aufweist.

Die Lagen werden bei der Herstellung von Fahrzeugluftreifen als Gürtelbandage eingesetzt. Die Fahrzeugluftreifen weisen üblicherweise eine Radialkarkasse, die im Wulstbereich durch Umschlingen zugfester Wulstkerne verankert ist, einen radial außen befindlichen, Profilrillen aufweisenden Laufstreifen, einen zwischen dem Laufstreifen und der Karkasse befindlichen Gürtel aus wenigstens einer Gürtellage mit gummierten Festigkeitsträgern und gegebenenfalls eine zwischen Laufstreifen und Gürtel angeordnete ein- oder mehrlagige Gürtelbandage für den Gürtel aus parallel und im Wesentlichen in Reifenumfangsrichtung verlaufenden Festigkeitsträgern, die zumindest die Gürtelränder abdeckt, auf.

Ein Fahrzeugluftreifen mit der erfindungsgemäßen Lage als Gürtelbandage kann mittels herkömmlicher Reifenherstellprozesse hergestellt werden, in dem die einzelnen Reifenbauteile auf eine Reifenaufbautrommel gewickelt werden und der Reifen anschließend bombiert und vulkanisiert wird.

Ausführungsbeipiele und weitere Vorteile der Erfindung werden im Zusammenhang mit den Tabellen näher erläutert:

Ein Aramidgarn auf der Basis von Co-Poly-para-phenylen-3,4'-oxydiphenylen-terephthalamid mit einer Feinheit von 1670 dtex, Z-gedreht mit 370 T/m Erstverdrehung und ein Garn aus Nylon 6.6 mit einer Feinheit von 1400 dtex, S-gedreht mit 370 T/m Erstverdrehung wurden mit einer Endverdrehung von 370 T/m zu einem Hybridcord (Aramid 1670x1 + PA6.6 1400x1) verdreht. Dieser Cord wies die in Tabelle 1 dargestellten Restfestigkeiten nach Ermüdung mit 50 Mio.Zyklen Wechselbeanspruchung Kompression/Dehnung 2,5 %/2,5 % auf. Als Vergleich sind Corde aus Nylon und Aramid aufgeführt, wobei ersichtlich wird, dass der Hybridcord eine höhere Restfestigkeit nach Ermüdung aufweist als der Aramidcord.

Tabelle 1

| Cord-Konstruktion | Drehungszahl [T/m] | Restfestigkeit nach Ermüdung [%] |
|---|---|---|
| Hybrid [Aramid dtex 1670x + Nylon 1400x1] | 370/370 | 100 |
| Nylon dtex 1400x2 | 370/370 | 100 |
| Aramid dtex 1670x2 | 370/370 | 60-80 |

Die Hybridcorde wurden mit für die Kautschukindustrie üblichen Imprägnierungen vorbehandelt und in Längsrichtung als Cordgewebelage oder in Form von Einzelcorden durch einen Kalander oder einen Extruder zur Ummantelung mit einer zur Einbettung von Festigkeitsträgern üblichen Kautschukmischung unter Erwärmung geleitet.

Mit dem vorgenannten Hybridcord wurden Kraft-Dehnungsdaten gemäß ASTM D 855M ermittelt, die in der Tabelle 2 aufgeführt sind. Ferner sind in der Tabelle die Produkte aus Kraft $F_x$ bei x % Dehnung und der Cordzahl E für verschiedene Cordzahlen pro 5 cm Lagenbreite, d. h. für verschiedene Cordfadendichten, angegeben, wobei alle Lagen erfindungsgemäß ausgebildet sind.

Tabelle 2

| | $F_x$ des kalandrierten Einzelcordes | $F_x$ x E für kalandrierte Lagen | | | |
|---|---|---|---|---|---|
| | | E = 45 | E=40 | E=35 | E=30 |
| | [N] | [N] | [N] | [N] | [N] |
| 1 % Dehnung | 16 | 720 | 640 | 560 | 480 |
| 2 % Dehnung | 34 | 1530 | 1360 | 1190 | 1020 |
| 3 % Dehnung | 56 | 2520 | 2240 | 1960 | 1680 |
| 3,5 % Dehnung | 72 | 3240 | 2880 | 2520 | 1920 |
| 4 % Dehnung | 90 | 4050 | 3600 | 3150 | 2700 |
| 6 % Dehnung | 195 | 8780 | 7810 | 6830 | 5860 |
| 8 % Dehnung | 333 | 14990 | 11320 | 11660 | 9990 |

Analoge Daten wurden für Nylon 6.6-Corde mit einer Erst- und Endverdrehung von 480 T/m beim Cord mit dtex 940x2 und einer Erst- und Endverdrehung von 370 T/m beim Cord mit dtex 1400x2 ermittelt und sind in Tabelle 3 aufgelistet, wobei ersichtlich ist, dass die Lagen mit Nylon nicht die gemäß Anspruch 1 geforderten Bedingungen $F_1$ x E $\geq$ 600 N und $F_2$ x E > 1500 N erfüllen.

Tabelle 3

| | $F_x$ des kalandrierten Einzelcordes | | $F_x$ x E für kalandrierte Lagen | |
|---|---|---|---|---|
| | Nylon dtex 940x2 | Nylon dtex 1400x2 | Nylon dtex 940x2 E=50,5 | Nylon dtex 1400x2 E = 45 |
| | [N] | [N] | [N] | [N] |
| 1 % Dehnung | 0,7 | 0,9 | 360 | 420 |
| 2 % Dehnung | 1,1 | 1,5 | 560 | 680 |
| 3% Dehnung | 1,4 | 1,9 | 710 | 860 |
| 3,5% Dehnung | 1,6 | 2,1 | 780 | 940 |
| 4% Dehnung | 1,7 | 2,3 | 880 | 1030 |
| 6 % Dehnung | 2,6 | 3,3 | 1330 | 1480 |
| 8% Dehnung | 3,9 | 4,7 | 1990 | 2100 |

Mit einer Lage mit dem Hybridcord (Aramid 1670x1 + PA6.6 1400x1) mit einer Cordzahl von 45 Corden pro 5 cm als einlagige Gürtelbandage über einem zweilagigen Stahlgürtel wurden Reifen A der Dimension 235/45 R17 nach herkömmlichen Produktionsverfahren hergestellt. Als Vergleich wurde der gleiche Reifen B mit einer zwei-, an den Gürtelrändern dreilagigen Gürtelbandage enthaltend Nylon 6.6 mit der Konstruktion 1400 x 2 und einer Cordzahl E von 45 (Cord gemäß Tabelle 3) hergestellt. Die Reifen wurden hinsichtlich des Abriebs, der Hochgeschwindigkeitstauglichkeit, des Abplattens bei Last und des Gewichts untersucht.

Das Abriebverhalten der Reifen wurde im Straßenversuch (20000 km Gesamtstrecke) und auf Testmaschinen untersucht, dabei ergab sich, dass der Reifen A mit der erfindungsgemäßen Lage als Bandage deutliche Vorteile (d. h. verringerter Abrieb) sowohl im ungleichmäßigen und lokalen Abrieb (z. B. Klotzausbrüche oder Sägezahnprofil) als auch im über die Umfangsrichtung gleichförmigen Abrieb (z. B. Rippenabsenkungen) gegenüber dem Vergleichsreifen B mit Nylonbandage bringt. Insbesondere der Abrieb im Mittenbereich des Reifens war bei den Reifen A stark reduziert. Die aus den Maschinen und Straßendaten ermittelten Lebenserwartungen für den Reifen liegen bei dem Reifen A mit der erfindungsgemäßen Lage als Bandage um ca. 20 % höher.

Beim Vergleich der Reifen A und B im Hochgeschwindigkeitsbereich ergab sich für den Reifen A eine verbesserte Hochgeschwindigkeitshaltbarkeit, so dass der Reifen bei Hochgeschwindigkeitsfahrt im Vergleich zum Reifen B erst bei einer um 10 bis 20 km/h höheren Geschwindigkeit auf der Prüfmaschine ausfiel. Die Abplattung bei Last (Flatspotting) ist bei dem Reifen A gegenüber dem Reifen B um ca. 10 % verringert und das Gewicht des Reifens A gegenüber dem Reifen B wurde durch Verwendung einer einlagigen Bandage, die trotz Einlagigkeit gegenüber einer mehrlagigen Nylonbandage eine verbesserte Hochgeschwindigkeitshaltbarkeit beim Reifen bewirkt, um 635 g reduziert.

**Patentansprüche**

1. Lage mit in eine unvulkanisierte Kautschukmischung eingebetteten Festigkeitsträgern für die Gürtelbandage von Fahrzeugluftreifen,

   wobei die Festigkeitsträger innerhalb der Lage im Wesentlichen parallel zueinander verlaufen und Hybridcorde sind, die aus einem ersten verdrehten Garn mit einem hohen Elastizitätsmodul von zumindest 25000 N/mm$^2$ und einem zweiten verdrehten Garn mit einem niedrigen Elastizitätsmodul von nicht mehr als 15000 N/mm$^2$, die miteinander endverdreht sind, aufgebaut sind, **gekennzeichnet dadurch, dass**

   die Hybridcorde symmetrisch aufgebaut sind, und die Erstverdrehungzahlen des ersten und des zweiten Garnes im Wesentlichen gleich sind mit einer maximalen Abweichung von 7 %; ein Garn ist in Z- und das andere in S-Richtung gedreht und der Cord ist mit einer den Erstverdrehungszahlen im Wesentlichen gleichen Endverdrehungszahl zusammengedreht, und

   die Cordzahl E in Corden pro 5 cm Lagenbreite, die Kraft $F_1$ bei 2 % Dehnung des Hybridcordes und die Kraft $F_2$ bei 6 % Dehnung des Hybridcordes die folgenden Beziehungen erfüllen:

   $$F_1 \times E \geq 600 \, N$$

   $$F_2 \times E > 1500 \, N.$$

2. Lage nach Anspruch 1, **dadurch gekennzeichnet, dass** die Cordzahl E in Corden pro 5 cm Lagenbreite und die Kraft $F_1$ bei 2 % Dehnung des Hybridcordes die folgende Beziehung erfüllen:

   $$1000 \, N < F_1 \times E < 2000 \, N.$$

3. Lage nach Anspruch 1 oder 2, **dadurch gekennzeichnet, dass** die Cordzahl E in Corden pro 5 cm Lagenbreite und die Kraft $F_2$ bei 6 % Dehnung des Hybridcordes die folgende Beziehung erfüllen: $5500 \, N < F_2 \times E < 11000 \, N$.

4. Lage nach zumindest einem der vorhergehenden Ansprüche, **dadurch gekennzeichnet, dass** die Cordzahl E in Corden pro 5 cm Lagenbreite und die Kraft $F_3$ bei 1 % Dehnung des Hybridcordes die folgende Beziehung erfüllen:

   $$F_3 \times E > 250 \, N.$$

5. Lage nach zumindest einem der vorhergehenden Ansprüche, **dadurch gekennzeichnet, dass** die Cordzahl E in Corden pro 5 cm Lagenbreite und die Kraft $F_4$ bei 4 % Dehnung des Hybridcordes die folgende Beziehung erfüllen:

   $$F_4 \times E > 3000 \, N.$$

6. Lage nach zumindest einem der vorhergehenden Ansprüche, **dadurch gekennzeichnet, dass** das Garn mit dem hohen Elastizitätsmodul ein Aramidgarn mit einer Feinheit $\geq$ 1100 dtex ist.

7. Lage nach Anspruch 6, **dadurch gekennzeichnet, dass** das Aramidgarn auf Co-Poly-para-phenylen-3,4'-oxydiphenylen-terephthatamid basiert.

8. Lage nach zumindest einem der vorhergehenden Ansprüche, **dadurch gekennzeichnet, dass** das Garn mit dem niedrigen Elastizitätsmodul ein Nylongarn mit einer Feinheit $\geq$ 940 dtex ist.

9. Lage nach zumindest einem der vorhergehenden Ansprüche, **dadurch gekennzeichnet, dass** die Erst- und Endverdrehungszahlen 320 bis 400 T/m betragen.

**10.** Fahrzeugluftreifen enthaltend eine Gürtelbandage aus einer Lage gemäß einem der Ansprüche 1 bis 9.

**Claims**

**1.** Ply comprising strength carriers embedded in an unvulcanized rubber mixture for the belt bandage of vehicle pneumatic tyres, the strength carriers running essentially parallel to one another within the ply and being hybrid cords that include a first twisted yarn having a high modulus of elasticity of at least 25 000 N/mm$^2$ and a second twisted yarn having a low modulus of elasticity which is no greater than 15 000 N/mm$^2$, which are final-twisted together, **characterized in that**
the hybrid cords are symmetrically structured, and the initial twist counts of the first and second yarns are essentially equal to a maximum deviation of 7%; one yarn is twisted in a Z direction and the other in an S direction and the cord is twisted together with a final twist count that is essentially equal to the initial twist counts, and the cord count E in cords per 5 cm ply width, the force $F_1$ at 2% elongation of the hybrid cord, and the force $F_2$ at 6% elongation of the hybrid cord satisfy the following relationships:

$$F1 \times E \geq 600 \text{ N}$$

$$F_2 \times E > 1500 \text{ N.}$$

**2.** Ply according to Claim 1, **characterized in that** the cord count E in cords per 5 cm ply width and the force $F_1$ at 2% elongation of the hybrid cord satisfy the following relationship: 1000 N < $F_1$ x E < 2000 N.

**3.** Ply according to Claim 1 or 2, **characterized in that** the cord count E in cords per 5 cm ply width and the force $F_2$ at 6% elongation of the hybrid cord satisfy the following relationship: 5500 N < $F_2$ x E < 11 000 N.

**4.** Ply according to at least one of the preceding claims, **characterized in that** the cord count E in cords per 5 cm ply width and the force $F_3$ at 1% elongation of the hybrid cord satisfy the following relationship:

$$F_3 \times E > 250 \text{ N.}$$

**5.** Ply according to at least one of the preceding claims, **characterized in that** the cord count E in cords per 5 cm ply width and the force $F_4$ at 4% elongation of the hybrid cord satisfy the following relationship:

$$F_4 \times E > 3000 \text{ N.}$$

**6.** Ply according to at least one of the preceding claims, **characterized in that** the yarn with the high modulus of elasticity is an aramid yarn with a fineness $\geq$ 1100 dtex.

**7.** Ply according to Claim 6, **characterized in that** the aramid yarn comprises copolyparaphenylene/3,4'-oxydiphenylene terephthalamide.

**8.** Ply according to at least one of the preceding claims, **characterized in that** the yarn with the low modulus of elasticity is a nylon yarn with a fineness $\geq$ 940 dtex.

**9.** Ply according to at least one of the preceding claims, **characterized in that** the initial and final twist counts are 320 to 400 T/m.

**10.** Vehicle pneumatic tyre containing a belt bandage comprising a ply according to one of Claims 1 to 9.

**Revendications**

1. Couche dans laquelle des renforts sont incorporés dans un mélange de caoutchouc non vulcanisé, pour la ceinture de bandages pneumatiques pour véhicules,

   dans laquelle les renforts s'étendent essentiellement en parallèle les uns aux autres à l'intérieur de la couche et sont des câbles hybrides constitués d'un premier fil torsadé présentant un module d'élasticité élevé, d'au moins 25 000 N/mm$^2$, et d'un deuxième fil torsadé présentant un module d'élasticité bas qui ne dépasse pas 15 000 N/mm$^2$, ces deux fils étant finalement torsadés l'un avec l'autre,

   **caractérisée en ce que** les câbles hybrides ont une structure symétrique et **en ce que** les nombres de premières torsions du premier fil et du deuxième fil sont sensiblement identiques, avec un écart maximal de 7 %, un fil étant torsadé dans la direction Z et l'autre dans la direction S, le câble étant torsadé à un nombre de torsions finales essentiellement égal au nombre de premières torsions, et **en ce que** le nombre de câbles E exprimé en câbles par 5 cm de largeur de la couche, la force $F_1$ à un allongement de 2 % du câble hydride et la force $F_2$ à un allongement de 6 % du câble hybride satisfont les équations suivantes :

$$F_1 \times E \geq 600 \text{ N}$$

$$F_2 \times E > 1\ 500 \text{ N}.$$

2. Couche selon la revendication 1, **caractérisée en ce que** le nombre de câbles E exprimé en câbles par 5 cm de largeur de la couche et la force $F_1$ à un allongement de 2 % du câble hybride satisfont l'équation suivante :

$$1\ 000 \text{ N} < F_1 \times E < 2\ 000 \text{ N}.$$

3. Couche selon les revendications 1 ou 2, **caractérisée en ce que** le nombre de câbles E exprimé en câbles par 5 cm de largeur de la couche et la force $F_2$ à un allongement de 6 % du câble hybride satisfont l'équation suivante :

$$5\ 500 \text{ N} < F_2 \times E < 11\ 000 \text{ N}.$$

4. Couche selon au moins l'une des revendications précédentes, **caractérisée en ce que** le nombre de câbles E exprimé en câbles par 5 cm de largeur de la couche et la force $F_3$ à un allongement de 1 % du câble hybride satisfont l'équation suivante :

$$F_3 \times E > 2\ 50 \text{ N}.$$

5. Couche selon au moins l'une des revendications précédentes, **caractérisée en ce que** le nombre de câbles E exprimé en câbles par 5 cm de largeur de la couche et la force $F_4$ à un allongement de 4 % du câble hybride satisfont l'équation suivante :

$$F_4 \times E > 3\ 000 \text{ N}.$$

6. Couche selon au moins l'une des revendications précédentes, **caractérisée en ce que** le fil présentant un module d'élasticité élevé est un fil d'aramide dont la finesse est $\geq$ 1 100 dtex.

7. Couche selon la revendication 6, **caractérisé en ce que** le fil d'aramide est à base d'un copolymère d'amide téréphtalique, de paraphénylène et de 3,4'-oxydiphénylène.

8. Couche selon au moins l'une des revendications précédentes, **caractérisée en ce que** le fil présentant un module d'élasticité bas est un fil de nylon dont la finesse est ≥ 940 dtex.

9. Couche selon au moins l'une des revendications précédentes, **caractérisée en ce que** les nombres de premières torsions et de torsions finales sont compris entre 320 et 400 torsions/m.

10. Bandage pneumatique pour véhicules dont le bandage de ceinture est fait d'une couche selon l'une des revendications 1 à 9.